# EUROPÄISCHE PATENTANMELDUNG

(11) **EP 1 596 195 A1**
(43) Veröffentlichungstag der Anmeldung: **16.11.2005**
(21) Anmeldenummer: 05008736.0
(22) Anmeldetag: 21.04.2005
(51) Int. Cl.: G01N 30/94, B01D 15/08

(54) **Vorrichtung und Verfahren zur Postchromatographischen Derivatisierung**

(30) Priorität: 26.04.2004 EP 04009814
(71) Anmelder: DSM IP Assets B.V., 6411 TE Heerlen (NL)
(72) Erfinder: Feusi, Boris, 4310 Rheinfelden (CH)
(74) Vertreter: Schwander, Kuno

(57) **Zusammenfassung**

Es sind aus dem Stand der Technik verschiedene Verfahren zur Derivatisierung von DC-Chromatogrammen bekannt, die aber alle bedeutende Nachteile aufweisen. Bei diesen Verfahren und den dazu verwendeten Vorrichtungen handelt es sich im wesentlichen um Einzelverfahren, welche unabhängig voneinander oder nacheinander durchgeführt werden. Dabei erweist es sich insbesondere dann als unwirtschaftlich und aus Umweltschutzgründen unerwünscht, wenn zur Probenanalyse zusätzlich chemische Substanzen für die Herstellung der eigentlichen Derivatisierungsagenzien verwendet werden. Der Erfindung liegt nun die Aufgabe zugrunde, eine Vorrichtung zur Derivatisierung von Dünschichtchromatogrammen auf Basis eines Fluid- oder gasförmigen Reagenzes zu schaffen, welche bei einfachem Aufbau und sicherer Handhabbarkeit eine Analyse in einem relativ kurzen Zeitraum ermöglicht sowie eine material- und umweltschonende Vorgehensweise gestattet. Diese Aufgabe wird erfindungsgemäss dadurch gelöst, dass nach Durchführung einer Chromatographie die mit der zu analysierenden Substanz versehene Chromatographieplatte zur Durchführung der Derivatisierung in eine fluid- und gasdicht verschlossene Kammer mit einem Einlass und einem Auslass gebracht wird und dass dann die Chromatographieplatte innerhalb dieser Kammer mit einem Fluid oder Gas, beispielsweise Chlorgas oder einem Nitrosegas der Derivatisierung unterworfen wird.

## Beschreibung

Die Erfindung betrifft eine Vorrichtung und ein Verfahren zur Probenanalyse, insbesondere zur postchromatographischen Derivatisierung von Chromatographieplatten, wie Dünnschicht-Chromatographieplatten.

Der grosse Vorteil der Dünnschicht-Chromatographie (DC) gegenüber allen anderen chromatographischen Verfahren ist die Möglichkeit zur direkten Parallelanalyse. Die Gleichzeitigkeit der Analyse von mehreren Proben in ein und demselben Analysengang kann je nach Anwendungsgebiet von grosser Wichtigkeit sein, so zum Beispiel bei der Qualitäts-Freigabe und Inprozesskontrollanalytik von Pharmawirkstoffen. Solche Analysemassnahmen geben der Dünnschicht-Chromatographie ein besonderes Gewicht.

Die praktische Durchführung einer DC-Trennung scheint sehr einfach zu sein. Jedoch muss einiges getan werden, um die Reproduzierbarkeit der Trennergebnisse (der sogenannten DC-Analysen) und die Detektion der getrennten Stoffe zu gewährleisten bzw. zu sichern. Die Reproduzierbarkeit ist heute mit der instrumentellen Dünnschicht-Chromatographie gesichert. Deshalb werden heute fast ausschliesslich nur kommerzielle Platten verwendet. Für die Detektion macht man sich bekannterweise die Lumineszenz zahlreicher Stoffe nach Bestrahlen mit kurzwelligem Licht zu Nutzen, wozu die getrocknete DC-Platte mit kurzwelligem Licht bestrahlt wird. Die getrennten und lumineszierenden Substanzen sind hierbei als helle, teilweise farbige Substanzflecken zu erkennen. Besitzen Verbindungen keine Lumineszenz (z.B. Wachse, gesättigte Kohlenwasserstoffe) dann geht man den umgekehrten Weg und bringt in das DC-Beschichtungsmaterial lumineszierende Stoffe ein. Solche Stoffe werden als sogenannte Fluoreszenz-Indikatoren bezeichnet. Die mit diesen Indikatoren behandelten Platten zeigen unter UV-Bestrahlung die entsprechende gelblich-grüne bzw. schwach-blaue Remission der behandelten Schicht. Substanzen, die selbst nicht lumineszieren (Licht emittieren) heben sich dann als dunkle Substanzzonen oder Flecken auf dem einheitlich emittierenden Plattenhintergrund ab. In wieder anderen Fällen, in denen die getrennten Substanzen weder durch eine Eigenfarbe noch durch den Einsatz von Fluoreszenz-Indikatoren sichtbar gemacht werden können, müssen die Substanzen auf der DC-Platte nachträglich in farbige und/oder fluoreszierende Verbindungen umgewandelt werden. Man bezeichnet diese Nachweisreaktion deshalb als postchromatographische Derivatisierung. Eine Vielzahl geprüfter Nachweisreaktionen ist hierzu bekannt. Zu den universellen, schnell durchführbaren und kostengünstigen Nachweismöglichkeiten gehören das Behandeln der fliessmittelfreien Chromatogramme mit Iod-Dampf oder Iod-Lösung sowie das Behandeln der Chromatogramme mit Chlorgas und nitrosen Gasen. In der Praxis werden vor allem die beiden zuletzt genannten Nachweisagenzien kurz vor der Derivatisierung in einer geschlossenen DC-Trogkammer über eine Redoxreaktion hergestellt. So zum Beispiel Chlorgas aus Kaliumpermanganat und Salzsäure bzw. nitrose Gase aus Natriumnitrat und Schwefelsäure. Nach Sättigung des Kammerraumes mit dem Gas wird das fliessmittelfreie Chromatogramm 30 Sekunden bis einige Minuten lang in die Kammer eingestellt. Das Gas schlägt sich dabei auf der DC-Platte nieder und löst die Derivatisierungsreaktion aus.

Die jeweils frisch herzustellenden Derivatisierungsagenzien der vorstehend genannten Art haben die Nachteile
- eines erhöhten Verbrauches von Ausgangsstoffen wie Kaliumpermanganat und Salzsäure bzw. Natriumnitrat und Schwefelsäure,
- einer erhöhten Geruchsbelästigung,
- der Kontaminationsgefahr,
- des Anfalls von Braunsteinabfällen,
also ganz allgemein den Nachteil zusätzlicher Gefahrenquellen im Analyse-Labor.

Darüber hinaus ist die Analysequalität bei derartigen Derivatisierungen auch davon abhängig wie homogen und gleichmässig die DC-Platte mit dem Gas behandelt werden. Es kann daher immer wieder vorkommen, dass Verunreinigungen, wie Spritzer etc. , die beispielsweise aus der exothermen Redoxreaktion entstehen, die Qualität des Endresultates auf nachteilige Art und Weise beeinflussen.

Es sind also aus dem Stand der Technik verschiedene Verfahren zur Derivatisierung von DC-Chromatogrammen bekannt, die bedeutende Nachteile aufweisen. Bei diesen Verfahren und den dazu verwendeten Vorrichtungen handelt es sich im wesentlichen um Einzelverfahren, welche unabhängig voneinander oder nacheinander durchgeführt werden. Dabei erweist es sich insbesondere dann als unwirtschaftlich und aus Umweltschutzgründen unerwünscht, wenn zur Probenanalyse zusätzlich chemische Substanzen für die Herstellung der eigentlichen Derivatisierungsagenzien verwendet werden.

Der Erfindung liegt nun die Aufgabe zugrunde, eine Vorrichtung zur Derivatisierung von Dünschichtchromatogrammen auf Basis eines Fluid- oder gasförmigen Reagenzes zu schaffen, welche bei einfachem Aufbau und sicherer Handhabbarkeit eine Analyse in einem relativ kurzen Zeitraum ermöglicht sowie eine material- und umweltschonende Vorgehensweise gestattet.

Diese Aufgabe wird gemäss Patentanspruch 1 dadurch gelöst, dass nach Durchführung einer Chromatographie die mit der zu analysierenden Substanz versehene Chromatographieplatte zur Durchführung der Derivatisierung in eine fluid- und gasdicht verschlossene Kammer mit einem Einlass und einem Auslass gebracht wird und dass dann die Chromatographieplatte innerhalb dieser Kammer mit einem Fluid oder einem Gas, beispielsweise Chlorgas oder einem Nitrosegas der Derivatisierung unterworfen wird.

Vorteilhafte Ausführungsformen der Erfindung sind Gegenstand der abhängigen Ansprüche.

Das mit der erfindungsgemässen Kammer durchführbare Verfahren zeichnet sich durch eine Reihe erheblicher Vorteile aus. So ist es erfindungsgemäss möglich, eine eindimensional, dünnschichtchromatographisch aufgetrennten Probelösung direkt einer weitere Analyse zu unterwerfen, ohne dass zusätzliche weitere Verfahrensschritte erforderlich wären.

Ein weiterer wesentlicher Vorteil des erfindungsgemässen Verfahrens ist dadurch gegeben, dass im Gegensatz zu den bisher verwendeten Verfahren nur eine sehr geringe Menge an Reagenz-Chemikalien erforderlich ist. Durch diese Massnahme kann zum einen die an die Umgebung abgegebene Chemikalienmenge wesentlich verringert und zum anderen die Verwendung der Chemikalienmengen auf ein Minimum reduziert werden, was besonders dann günstig ist, wenn DC-Analysen regelmässig in grosser Anzahl durchzuführen sind.

Ein weiterer Vorteil der Erfindung liegt darin, dass das durch die Untersuchungs-Chemikalien beeinflusste Luftvolumen der Laborräume minimiert werden kann, so dass sich für das Laborpersonal angenehmere Arbeitsbedingungen ergeben und dass insbesondere die Anforderungen an die Betriebssicherheit wesentlich leichter erfüllbar sind.

Ferner ist beim Einsatz der erfindungsgemässen Vorrichtung die Konzentration und Verteilung der Nachweisreagenzien in der Kammer so wähl- und steuerbar, dass eine homogene und Spritzer-freie Behandlung der DC-Platte möglich ist. Die erfindungsgemäss gleichmässige Begasung mit Chlor- und Nitrosegas ermöglicht also zudem eine deutliche Qualitätsverbesserung der DC-Derivatisierung und somit der Qualität der Analytik.

Und schliesslich ist die Kontamination mit gesundheitsschädlichen Aerosolen beim erfindungsgemässen Verfahren ausgeschlossen. Die Derivatisierung muss dann nicht unbedingt unter dem Abzug erfolgen.

Im Falle der Derivatisierung mittels Chlorgas und Nitrosegas kann des weiteren das Gas durch gesondertes Abziehen via Wasserstrahlpumpe und durch Reaktion mit Wasser sofort neutralisiert werden, was zusätzlich Vorteile mit sich bringt.

In einer besonders günstigen Weiterbildung der erfindungsgemässen Vorrichtung bzw. des erfindungsgemässen Verfahrens besitzt der Deckel ein Ausgleichventil zur Regulierung des Innendruckes während des Füllens und Entleerens der Kammer mit dem Derivatisierungsgas, und es befinden sich, wie nachfolgend noch näher erläutert wird, der Einlass vorzugsweise in der oberen Hälfte und der Auslass vorzugsweise im Unteren Bereich des im wesentlichen zylinderförmigen Behälters.

Hinsichtlich des erfindungsgemässen Behälters wird die der Erfindung zugrundeliegende Aufgabe dadurch gelöst, dass dieser aus einem inerten Material besteht und eine Kammer aufweist, die mit einem Deckel fluid- und gasdicht verschliessbar ist, wobei die Kammerwand mit zwei einander im wesentlichen gegenüberliegenden Anschlüssen versehen ist, welche über Absperrventile an je eine Fluid- oder Gasleitung anschliessbar sind. Durch die erfindungsgemässe Vorrichtung wird somit ein abgeschlossener Untersuchungsraum geschaffen, in welchem die Reagenzien auf besonders einfache und gleichmässige Weise auf die Chromatographieplatte aufgebracht werden kann, ohne dass die auf dieser aufgezeigten Ergebnisse der Chromatographie gestört würden und ohne dass die chemische Substanz in die Umgebung, insbesondere in den Laborraum austritt. Durch die Möglichkeit, den Behälter (dichtend) abzuschliessen, ist es darüber hinaus möglich, diesen ohne zusätzliche Sicherheitsmassnahmen zu handhaben.

Zur Verringerung der Menge der zu verwendenden Chemikalien und um eine möglichst schnelle und gleichmässige Probenbehandlung durchzuführen, ist ferner vorgesehen, die Abmessungen des Behälters so zu wählen und allenfalls mit einem DC-Plattenhalter zu versehen, dass mehrere DC-Platten gleichzeitig derivatisiert werden können, wozu der die Platten vorzugsweise senkrecht haltende Plattenhalter, die Schichten der Platte in einem geringen Abstand zueinander hält, beispielsweise in einem Abstand von 2 bis 10 mm.

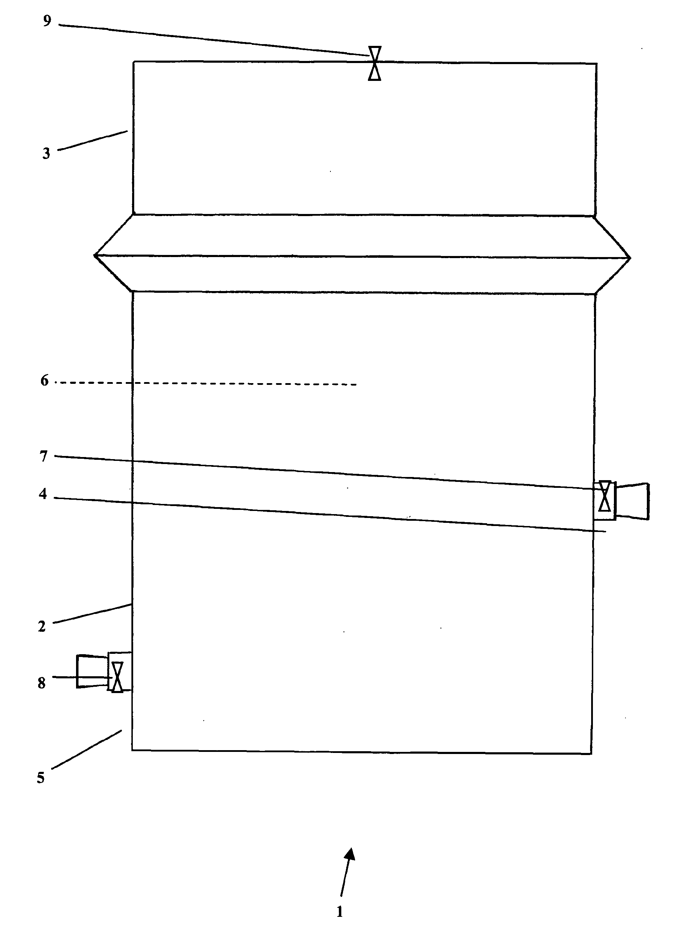

Im folgenden wird die Erfindung anhand eines Ausführungsbeispieles in Verbindung mit der Zeichnung beschrieben. Dabei zeigt die einzige Figur einen als ganzes mit 1 bezeichneten Behälter der erfindungsgemässen Art. Der beispielsweise zylindrische, im Querschnitt runde Behälter 1 besteht vorzugsweise aus Glas und besitzt eine Behälterwand 2 und einen fluid- und gasdicht auf die Behälteröffnung passenden Deckel 3. In der Behälterwand 2 sind zwei vorzugsweise einander gegenüberliegende Anschlüsse 4 und 5 vorgesehen, von welchen der erstere den Einlass 4 und der zweite den Auslass 5 bilden. In einem besonders bevorzugten Ausführungsbeispiel der Erfindung befindet sich der Einlass 4 in der oberen Hälfte und der Auslass 5 in der unteren Hälfte der Wandung 2. Dies ist vor allem darauf zurückzuführen, dass Derivatisierungsgase in der Regel spezifisch schwerer sind als Luft und somit sich beim Füllen des Behälters 1 innerhalb der Kammer 6 absenken. Des weiteren sind Ein- und Auslass mit je einem Regelventil 7 bzw. 8 versehen, um die Öffnungen 4 und 5 wahlweise freizugeben oder abzusperren.

Zur Durchführung einer Derivatisierung, beispielsweise mit Chlorgas, wird nun der Einlass 4 an die nicht gezeichnete Chlarogas-Quelle angeschlossen und der Auslass 5 über eine inerte Fluid- oder Gasleitung mit einer Wasserstrahlpumpe verbunden. Anschliessend stellt man die DC- Platte vorzugsweise leicht geneigt oder senkrecht in die Kammer 6 und verschliesst letztere mit dem Deckel 3.

Es kann nun bei geöffnetem Ventil 7 und geschlossenem Ventil 8 Chlorgas in die Kammer 6 geleitet werden, bis dieses den gesamtem Kammerinnenraum sättigt. Um hierbei einen Überdruck in der Kammer 6 zu vermeiden lässt man während des Füllvorganges die spezifisch leichtere Luft über ein im Deckel 3 vorhandenes zusätzliches Ausgleichventil 9 entweichen.

Nach erfolgtem Einlass des Chlorgases werden auch die Ventile 7 und 9 geschlossen und es folgt die eigentliche Derivatisierung, die beispielsweise 20 Sekunden bis mehrere Minuten dauern kann.

Nach erfolgter Derivatisierung öffnet man das Ventil 8 und ebenfalls das Ventil 9 und zieht mit Hilfe der am Auslass 5 angeschlossenen Wasserstrahlpumpe das in der Kammer 6 vorhandene Chlorgas ab. An der DC-Platte noch haftendes Gas wird anschliessend durch Trocknung, beispielsweise mit einem Föhn, entfernt.

Die derivatisiete DC-Platte ist frei von schändlichem Chlorgas und lässt sich ohne weitere Behandlung analysieren, beispielsweise unter UV-Bestrahlung, und anschliessend gemäss bekannten Verfahren photographieren, auswerten und klassifizieren.

Das durch die Wasserstrahlpumpe abgezogene Chlorgas wird im Ablaufkanal der Laboreinrichtung mittels Wasser sofort neutralisiert.

Das erfindungsgemässe Verfahren erweist sich insbesondere für die Identitätsprüfung und Qualitätskontrolle von pharmazeutischen Wirkstoffen als besonders geeignet.

Die Erfindung ist nicht auf die gezeigten Ausfiihrungsbeispiele beschränkt, vielmehr ergeben sich im Rahmen der Erfindung vielfältige Abwandlungsmöglichkeiten.

## Patentansprüche

1. Zur postchromatischen Derivatisierung einer Dünnschichtchromatographieplatte dienender Behälter (1) mittels eines Fluids oder Gases, **gekennzeichnet durch** eine mit einem Deckel (3) fluid- und gasdicht verschliessbaren und zur Aufnahme mindestens einer Chromatographieplatte dienenden Kammer (6) mit einem jeweils wahlweise absperr- oder freigebbaren Einlass (4) und einem Auslass (5).

2. Behälter nach Anspruch 1, **dadurch gekennzeichnet, dass** der Deckel (3) eine Öffnung aufweist, die mit einem die Öffnung wahlweise absperrbaren oder freigebbaren Ausgleichventil (9) versehen ist.

3. Behälter nach Anspruch 1 oder 2, **dadurch gekennzeichnet, dass** er aus Glas besteht.

4. Behälter nach Anspruch 1, **dadurch gekennzeichnet, dass** er im wesentlichen zylindrisch ist.

5. Verfahren zur postchromatischen Derivatisierung mindestens einer Dünnschichtchromatographieplatte mittels eines Behälters (1) gemäss einem der Ansprüche 1 bis 4, **dadurch gekennzeichnet, dass** nach Durchführung einer Chromatographie die mindestens eine Chromatographieplatte zur Durchführung der Derivatisierung in die fluid- und gasdicht verschlossene Kammer (6) gebracht wird und dass dann die mindestens eine Chromatographieplatte innerhalb dieser Kammer (6) mit einem Fluid oder Gas derivatisiert wird, wozu der Einlass (4) direkt an die Fluid- bzw. Gasquelle angeschlossen und der Auslass (5) über eine Fluid- bzw. Gasleitung mit einer Wasserstrahlpumpe verbunden wird.

6. Verfahren nach Anspruch 5, **dadurch gekennzeichnet, dass** als Gas Chlorgas verwendet wird.

7. Verfahren nach Anspruch 5, **dadurch gekennzeichnet, dass** als Gas ein nitroses Gas verwendet wird.
